# EUROPÄISCHE PATENTSCHRIFT

(11) **EP 3 298 730 B1**
(45) Veröffentlichungstag und Bekanntmachung des Hinweises auf die Patenterteilung: **27.03.2019**
(21) Anmeldenummer: 16724375.7
(22) Anmeldetag: 18.05.2016
(51) Int. Cl.: H04L 12/403, H04L 12/40, H04L 29/12, G06F 12/06

(54) **BUSSYSTEM UND VERFAHREN ZUM ZUTEILEN VON ADRESSEN VON BUSTEILNEHMERN EINES BUSSYSTEMS**
BUS SYSTEM AND METHOD FOR ASSIGNING ADDRESSES OF BUS COMPONENTS OF A BUS SYSTEM
SYSTÈME DE BUS ET PROCÉDÉ D'ATTRIBUTION D'ADRESSES À DES ABONNÉS D'UN SYSTÈME DE BUS

(30) Priorität: 19.05.2015 DE 102015107865
(43) Veröffentlichungstag der Anmeldung: 28.03.2018
(73) Patentinhaber: Weidmüller Interface GmbH & Co. KG, 32758 Detmold (DE)
(72) Erfinder: WOLF, Sebastian, 32791 Lage (DE)
(74) Vertreter: Kleine, Hubertus
(86) Internationale Anmeldenummer: PCT/EP2016/061095
(87) Internationale Veröffentlichungsnummer: WO 2016/184889

(56) Entgegenhaltungen:
- EP-A1- 0 551 114
- EP-A1- 1 653 363

## Beschreibung

Die Erfindung betrifft ein Bussystem mit einem Busmaster, mindestens zwei Busteilnehmern und einem Bus, der die Busteilnehmer mit dem Busmaster verbindet. Dabei weist der Bus mindestens eine Datenleitung und mindestens eine Stromversorgungsleitung auf. Die Erfindung betrifft weiterhin ein Verfahren zum Zuteilen von Adressen von Busteilnehmern durch einen Busmaster, der über einen Bus mit den Busteilnehmern verbunden ist.

Derartige Bussysteme werden beispielsweise zur Steuerung von industriellen Geräten verwendet. Der Busmaster kann beispielsweise ein Gateway sein, das seinerseits an einem übergeordneten Feldbus einer industriellen Automatisierungsanlage angeschlossen ist. Das genannte Bussystem fungiert dann als ein Subbussystem zum Feldbus zur Ansteuerung insbesondere einfacher industrieller Geräte. Solche Geräte können beispielsweise industrielle Schaltgeräte wie Schütze oder Motorstarter sein, oder auch Messsensoren.

Da das Ansteuern derartiger einfacher Schaltgeräte, das Auslesen eines Schaltzustands eines solchen Geräts oder auch das Einlesen von Messwerten in vielen Fällen weder zeitkritisch ist, noch ein großes Datenvolumen benötigt, kann der genannte Bus einfach und robust aufgebaut sein und beispielsweise auf der CAN-Bus-Spezifikation beruhen. Neben einer oder häufig zwei (differenziellen) Datenleitungen sind zudem meist zwei Stromversorgungsleitungen vorgesehen. Auf diese Weise kann ein Bus, der nur vier Leitungen aufweist, die Busteilnehmer sowohl mit Strom versorgen, als auch eine Datenkommunikation zwischen dem Busmaster und den Busteilnehmern mit ausreichender Übertragungsbandbreite herstellen.

Zur eindeutigen Adressierung der Busteilnehmer durch den Busmaster müssen den einzelnen Busteilnehmern eindeutige Adressen zugeordnet werden. Hierzu sind verschiedene Verfahren bekannt. Beispielsweise kann ein Busteilnehmer eine manuelle Einstellmöglichkeit einer Adresse aufweisen. In diesem Fall ist bei der Einrichtung des Bussystems dafür Sorge zu tragen, dass jede mögliche Adresse nur einmal bei den Busteilnehmern, die an dem Bus angeschlossen sind, verwendet wird. Bequemer und flexibler sind Verfahren zur Zuteilung von Adressen, die eine automatische Adressierung in einer Initialisierungsphase vornehmen.

Ein derartiges Verfahren ist aus der Druckschrift DE 10 2006 030 706 B4 bekannt. Bei diesem Bussystem und Adressierungsverfahren sind alle Busteilnehmer permanent über Stromversorgungsleitungen und Datenleitungen des Busses mit dem Busmaster verbunden. Zusätzlich ist bei dem Bus eine Steuerleitung vorgesehen, die vom Busmaster zu einem ersten Busteilnehmer verläuft und von dem ersten Busteilnehmer bedarfsweise zu einem nächsten Busteilnehmer durchgeschleift wird. Diese Steuerleitung ist somit nicht durchgängig ausgeführt, sondern nach Art einer sogenannten Daisy-Chain-Kette. Die Daisy-Chain-Kette der Steuerleitung ermöglicht eine automatische Adresszuteilung, indem - Ausgewählt über eine aktivierte Steuerleitung - zunächst vom Busmaster nur ein erster Busteilnehmer angesprochen wird und eine Zuteilung der Adresse an dem ersten Busteilnehmer erfolgt. Nach erfolgter Adresszuteilung an den ersten Busteilnehmer aktiviert dieser den Abschnitt der Steuerleitung, der zum nächsten Busteilnehmer führt, woraufhin eine Adresszuteilung an diesen nächsten Busteilnehmer erfolgen kann. Das Verfahren wird solange fortgesetzt, bis allen angeschlossenen Busteilnehmern eine Adresse zugeteilt wurde. Nachteilig ist hierbei, dass im Bus die zusätzliche Steuerleitung benötigt wird.

Auch die Druckschrift EP 1 653 363 A1 beschreibt ein Bussystem, bei dem Busteilnehmer über den Bus permanent über Stromversorgungsleitungen und Datenleitungen mit einem Busmaster verbunden sind. Der Bus weist neben den Datenleitungen eine Steuerleitung auf, über die eine Adressenvergabe gesteuert wird.

Ein weiteres bekanntes Daisy-Chain Verfahren sieht die Unterbrechung der Datenleitung durch jeden der Busteilnehmer vor. Nur ein Busteilnehmer, dem bereits eine Adresse zugeteilt wurde, leitet Daten an den nächsten Busteilnehmer weiter, so dass eine nächste Adresszuteilung des Busmasters den nächsten Busteilnehmer erreicht.

Aus Gründen der Betriebssicherheit von industriellen Anlagen ist in vielen Fällen gefordert, dass bestimmte sicherheitsrelevante Ereignisse, beispielsweise das Betätigen eines Notausschalters oder das Eindringen in einen mit einem Lichtgitter abgesicherten Bereich, zu einem sicheren Abschalten bestimmter Geräte führen müssen.

Bei dem zuvor beschriebenen Bussystem der Druckschrift DE 10 2006 030 706 B4 oder auch bei einem Bussystem, bei dem die Datenleitung unterbrochen wird, kann ein derartiges Abschalten der von den Busteilnehmern angesteuerten Geräte nur über einen Busbefehl erfolgen, was gegebenenfalls den Sicherheitsanforderungen nicht genügt.

Aus der Druckschrift EP 0 551 114 A1 ist ein Bussystem bekannt, das speziell zur Informationsübertragung in schwer zugänglichen Regionen, z.B. im Unterwasserbereich, vorgesehen ist. Busteilnehmer, die Aktoren und/oder Sensoren aufweisen, sind über einen Bus in einer Kette hintereinander angeordnet, wobei der Bus der Strom- und Datenübertragung dient. Die Kette der Busteilnehmer ist an beiden Enden mit jeweils einer Kopfstation zur Energie- und Datenübertragung verbunden. Die Stromversorgungsleitungen sind dabei innerhalb der Busteilnehmer abtrennbar mit Energieverbrauchen im Busteilnehmer verbunden, wobei im Falle von Kurzschlüssen oder Unterbrechungen der Zustand beider Anschlussseiten geprüft und die Versorgungsleitungen der gestörten Seite freigeschaltet und die Energieversorgung von der anderen Anschlussseite übernommen wird. So werden eine redundante Versorgung der Busteilnehmer und damit eine erhöhte Verfügbarkeit erzielt.
Es ist eine Aufgabe der vorliegenden Erfindung, ein Bussystem und ein Verfahren zur Adressierung von Busteilnehmern des Bussystems anzugeben, bei denen auf einfache Weise eine erhöhte Sicherheitsanforderung beim Abschalten von an den Busteilnehmern angeschlossenen bzw. von den Busteilnehmern gesteuerten Geräten umsetzbar ist und das eine möglichst geringe Anzahl an Busleitungen benötigt.

Diese Aufgabe wird durch ein Bussystem bzw. ein Verfahren zum Zuteilen von Adressen von Busteilnehmern mit den Merkmalen der unabhängigen Ansprüche gelöst. Vorteilhafte Ausgestaltungen und Weiterbildungen sind in den abhängigen Ansprüchen angegeben.

Bei einem erfindungsgemäßen Verfahren zum Zuteilen von Adressen von Busteilnehmern durch einen Busmaster sind die Busteilnehmer über einen Bus mit dem Busmaster verbunden und der Bus weist mindestens eine Datenleitung und mindestens eine Stromversorgungsleitung für die Busteilnehmer auf. Die mindestens eine Datenleitung ist von dem Busmaster zu allen Busteilnehmern geführt und die Stromversorgungsleitung ist von dem Busmaster zu einem ersten der Busteilnehmer geführt und über ein Schaltorgan in dem ersten Busteilnehmer zu einem weiteren Busteilnehmer durchgeschleift. Das Verfahren weist die folgenden Schritte auf: Die mindestens eine Stromversorgungsleitung des Busses wird durch den Busmaster mit einer Versorgungsspannung für den ersten Busteilnehmer beaufschlagt und eine erste Adresse an den ersten Busteilnehmer von dem Busmaster übermittelt. Die ersten Adresse wird von dem ersten Busteilnehmer empfangen und gespeichert, woraufhin das Schaltorgan des ersten Busteilnehmers betätigt wird, um den weiteren Busteilnehmer über einen nächsten Abschnitt der Stromversorgungsleitung mit der Versorgungsspannung zu beaufschlagen.

Bevorzugt wird nachfolgend durch den Busmaster eine weitere Adresse an den weiteren Busteilnehmer zugeteilt und diese von dem weiteren Busteilnehmer empfangen und gespeichert. Der weitere Busteilnehmer betätigt daraufhin wiederum ein im weiteren Busteilnehmer angeordnetes Schaltorgan, durch das ein nächster Abschnitt der Stromversorgungsleitung mit der Versorgungsspannung für einen nächsten Busteilnehmer beaufschlagt wird. Weiter bevorzugt werden die Schritte des Zuteilens einer weiteren Adresse, des Erhaltens und Speicherns der weiteren Adresse und das Betätigen eines Schaltorgans des weiteren Busteilnehmers sukzessive für alle an den Bus angeschlossenen Busteilnehmer durchgeführt, bis allen angeschlossenen Busteilnehmern eine Adresse zugeteilt ist.

Das anmeldungsgemäße Verfahren macht sich somit eine Daisy-Chain-Kette zur sukzessiven Adresszuteilung zunutze, wobei die Daisy-Chain-Technik jedoch nicht eine Datenleitung oder eine zusätzliche Steuerleitung benutzt, sondern eine die Busteilnehmer versorgende Stromversorgungsleitung. Auf diese Weise wird keine zusätzliche Leitung benötigt. Weiterhin bietet dieses die Möglichkeit, mithilfe des Schaltorgans am Bus nachgeordnete Busteilnehmer durch einen vorgeschalteten Busteilnehmer abzuschalten, um z.B. Sicherheitsanforderungen zu genügen.

In einer vorteilhaften Ausgestaltung des Verfahrens gibt der Busmaster ein Kommando zur Adresszuteilung mit einer zu vergebenden Adresse auf dem Bus aus, wobei dieses Kommando nur von einem bestromten Busteilnehmer berücksichtigt wird, der noch keine Adresse zugeteilt bekommen hat. So wird auf eine einfache Weise erreicht, dass nur der jeweils nächste, zuvor bestromte Busteilnehmer auf die Übermittlung der nächsten zu vergebenden Adresse reagiert.

In einer weiteren vorteilhaften Ausgestaltung des Verfahrens werden die Schritte zur Adresszuteilung ausgeführt, nachdem der Busmaster mit einer Spannung zu seiner Stromversorgung beaufschlagt wird. Auf diese Weise wird die Adresszuteilung automatisch nach der Inbetriebnahme eines Bussystems durchgeführt. Alternativ oder zusätzlich kann vorgesehen sein, die Schritte zur Adresszuteilung nach einer Betätigung eines Betätigungstasters am Busmaster auszuführen.

Bei einem Bussystem der eingangs genannten Art verbindet mindestens eine Datenleitung den Busmaster mit allen Busteilnehmern und mindestens eine Stromversorgungsleitung den Busmaster mit einem ersten Busteilnehmer. Die Stromversorgungsleitung ist durch den ersten Busteilnehmer zu einem weiteren Busteilnehmer durchgeschleift. Dabei ist innerhalb eines Busteilnehmers mindestens ein Schaltorgan in die Stromversorgungsleitung geschaltet.

Erfindungsgemäß ist ein derartiges Bussystem zur Durchführung des zuvor beschriebenen Adresszuteilungsverfahrens, bei dem die Stromversorgungsleitung des Busses verwendet wird, um in einer Daisy-Chain-Technik die Busteilnehmer sukzessive zur Adresszuteilung ansprechen zu können, eingerichtet. Es ergeben sich die im Zusammenhang mit dem erfindungsgemäßen Verfahren beschriebenen Vorteile.

In einer vorteilhaften Ausgestaltung des Bussystems weist der Busmaster ebenfalls ein Schaltorgan auf, um die mindestens eine Stromversorgungsleitung gesteuert mit einer Versorgungsspannung zu beaufschlagen. Durch die Möglichkeit, auch den ersten, zu dem ersten Busteilnehmer führenden Abschnitt der Stromversorgungsleitung auf dem Bus selektiv mit der Versorgungsspannung zu beaufschlagen, kann das erfindungsgemäße Verfahren jederzeit durch den Busmaster initialisiert werden.

In einer weiteren vorteilhaften Ausgestaltung des Bussystems weist der erste und/oder der weitere Busteilnehmer jeweils eine Busanschaltung auf, die dauerhaft mit der mindestens einen Datenleitung verbindbar ist. Bevorzugt weist jeder Busteilnehmer jeweils einen Mikrocontroller auf, der das Schaltorgan ansteuert. Dabei werden bevorzugt die Busanschaltung und/oder der Mikrocontroller über die mindestens eine Stromversorgungsleitung des Busses mit Betriebsstrom versorgt. Die Busanschaltung und/oder der Mikrocontroller stellen für den Datenaustausch mit dem Busmaster relevante Komponenten eines Busteilnehmers dar. Die Unterbrechung der Stromversorgung dieser Komponenten bedeutet faktisch eine Abschaltung des Busteilnehmers. Das Bestromen dieser Komponenten führt zur Abarbeitung von Initialisierungsroutinen, durch die der Busteilnehmer dann bereit zur Adresszuteilung ist.

In einer weiteren vorteilhaften Ausgestaltung des Bussystems weist das Schaltorgan des ersten und/oder des weiteren Busteilnehmers zwei hintereinander geschaltete, redundante Schalter auf. Wenn die Schaltorgane zur sicherheitsrelevanten Abschaltung am Bus nachgeordneter Busteilnehmer verwendet werden, erhöht die redundante Ausführung das Sicherheitsniveau, da eine Abschaltung auch bei einem fehlerhaft durchgeschalteten Schalter noch gesichert erfolgen kann.

Die Erfindung wird nachfolgend anhand von Ausführungsbeispielen mithilfe von Figuren näher erläutert. Die Figuren zeigen:
- Fig.1: ein schematisches Blockschaltbild eines Bussystems mit einem Busmaster und zwei Busteilnehmern;
- Fig.2: ein schematisches Flussdiagramm eines Verfahrens zur Zuteilung von Adressen an Busteilnehmer.

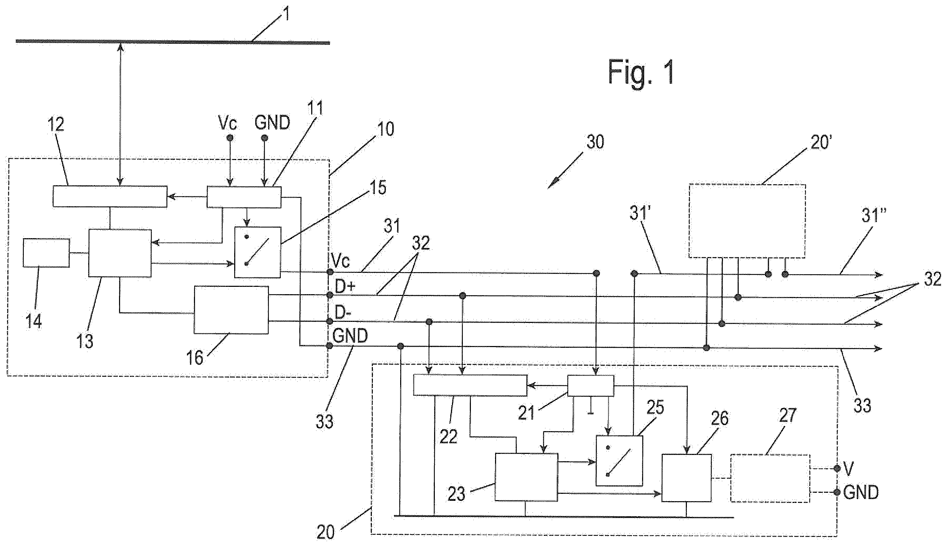

Fig. 1 zeigt in einem schematischen Blockschaltbild ein Bussystem mit einem Busmaster 10, der über einen Bus 30 mit zwei Busteilnehmern 20, 20' verbunden ist. Die Zahl von zwei Busteilnehmern 20, 20' ist beispielhaft. Nach rechts in der Fig.1 kann der Bus 30 zu weiteren Busteilnehmern geführt sein, die in gleicher Weise wie die dargestellten Busteilnehmer 20, 20' mit dem Bus 30 verbunden sind.

Der Busmaster 10 weist eine Stromversorgungseinheit 11 auf, die an eine von extern zugeführte Betriebsspannung (Vc gegenüber einem Massepotential GND) angeschlossen ist um den Busmaster 10 und auch die angeschlossenen Busteilnehmer 20, 20' mit Betriebsstrom zu versorgen. Beispielhaft wird der Stromversorgungseinheit 11 eine Gleichspannung von 24 Volt zugeführt. Die Stromversorgungseinheit 11 generiert benötigte Spannungen aus der zugeführten Spannung, unter anderem auch eine Spannung von ebenfalls 24Volt, die als Versorgungsspannung (Vc bzw. GND) auf dem Bus 30 über eine Stromversorgungsleitung 31 und eine Masseleitung 33 weitergeleitet wird. Bezüglich dieser Spannung kann die Stromversorgungseinheit 11 im einfachsten Fall ein Stromverteiler sein.

Der Busmaster 10 weist weiterhin eine Busanschaltung 12 auf, über die der Busmaster 10 einen übergeordneten Feldbus 1 beispielsweise eines industriellen Automatisierungssystems kontaktiert. In dem dargestellten Ausführungsbeispiel fungiert der Busmaster 10 daher als ein Gateway zwischen dem Bus 30 und dem übergeordneten Feldbus 1. Das anmeldungsgemäße Bussystem und auch das anmeldungsgemäße Verfahren zum Zuteilen von Adressen für Busteilnehmer dieses Bussystems kann jedoch auch von einem Busmaster durchgeführt werden, der eigenständig ist und nicht mit einem übergeordneten Feldbus verbunden ist.

Die in diesem Beispiel über den übergeordneten Feldbus 1 empfangenen Daten werden von der Busanschaltung 12 in einem Mikrocontroller 13, der mit einem Speicher 14 verbunden ist, weiter verarbeitet. Der Mikrocontroller 13 ist mit einem Schaltorgan 15 verbunden, das vom Mikrocontroller 13 geschaltet werden kann. Dieses Schaltorgan 15 ist zwischen die Stromversorgungseinheit 11 und den Bus 30 geschaltet und beaufschlagt im eingeschalteten (durchgeschalteten) Zustand die Stromversorgungsleitung 31 des Busses 30 gegenüber der Masseleitung 33 (Potential GND) mit der Betriebsspannung (Vc).

Weiterhin ist der Mikrocontroller 13 mit einem Bustreiber 16 verbunden, der mit zwei Datenleitungen 32 des Busses 30 verbunden ist. Über den Bustreiber 16 können vom Mikrocontroller 13 Daten auf die Datenleitungen 32 gesendet werden und umgekehrt auf den Datenleitungen 32 anliegende Signale als Daten empfangen und an den Mikrocontroller 13 weitergeleitet werden.

Im dargestellten Ausführungsbeispiel ist der Busteilnehmer 20 somit über den Bus 30 mit den genannten vier Busleitungen verbunden. Der dargestellte Bus kann beispielsweise auf der CAN-Bus-Spezifikation beruhen, die eine serielle Datenübertragung über zwei differenzielle Datenleitungen 32, in der Fig. 1 mit den Symbolen D- und D+ gekennzeichnet, vorsieht. Es versteht sich, dass der Bus 30 auch mit mehr oder weniger als den zwei dargestellten Datenleitungen 32 ausgebildet sein kann. Relevant für das vorgestellte Verfahren zur Adresszuteilung ist, dass neben mindestens einer Datenleitung 32 mindestens eine Stromversorgungsleitung 31 vorliegt.

Der dargestellte erste Busteilnehmer 20 weist eine Stromversorgungseinheit 21 auf, die mit der Stromversorgungsleitung 31 des Busses 30 verbunden ist. Über diese Stromversorgungsleitung 31 und die Stromversorgungseinheit 21 werden die im Folgenden genannten Komponenten des ersten Busteilnehmers 20 mit Strom versorgt.

Die über die Stromversorgungsleitung 31 versorgten Komponenten sind eine Busanschaltung 22, die die beiden Steuerleitungen 32 über Stichleitungen kontaktiert, und ein Mikrocontroller 23. Die Busanschaltung 22 wertet über die Datenleitungen 32 empfangene Daten aus und leitet sie an den Mikrocontroller 23 des ersten Busteilnehmers 20 weiter. Umgekehrt können von dem Mikrocontroller 23 über die Busanschaltung 22 Daten auf die Steuerleitung 32 gelegt werden, die dann von dem Bustreiber 16 des Busmasters 10 empfangen werden können.

Ein Ausgang des Mikrocontrollers 23 ist mit einem Steuereingang eines Schaltorgans 25 im ersten Busteilnehmer 20 verbunden. Über den Ausgang kann das Schaltorgan 25 von dem Mikrocontroller 23 geschaltet werden. Die Schaltstrecke des Schaltorgans 25 ist zum einen über die Stromversorgungseinheit 21 mit dem ersten Abschnitt der Stromversorgungsleitung 31 des Busses 30 verbunden und zum anderen mit einem Ausgangsanschluss des ersten Busteilnehmers 20, der mit einem weiteren Abschnitt 31' der Stromversorgungsleitung 31 verbunden ist. Die Datenleitungen 32 und auch die Masseleitung 33 des Busses 30 sind somit durchgehend ausgeführt, wohingegen die Stromversorgungsleitung 31 im Anschlussbereich des ersten Busteilnehmers 20 unterbrochen ist und über das Schaltorgan 25 unterbrechbar durch den ersten Busteilnehmer 20 geschleift ist.

Der erste Busteilnehmer 20 weist zudem eine Gerätesteuerung 26 auf, die spezifisch für die jeweilige Funktion des ersten Busteilnehmers 20 ist. Die Gerätesteuerung 26 kann beispielsweise Ausgangsleitungen zum Schalten eines Schützes bereitstellen oder das entsprechende Schütz bereits umfassen. Die Gerätesteuerung 26 wird im dargestellten Beispiel ebenfalls von der Stromversorgungseinheit 21 versorgt und ist mit dem Mikrocontroller 23 zur Ansteuerung verbunden. Als ein Ausführungsbeispiel eines ersten Busteilnehmers 20 ist beispielhaft und in gestrichelt dargestellt ein Netzteil 27 als Teil des ersten Busteilnehmers 20 dargestellt. Das Netzteil 27 ist mit einem Stromversorgungsnetz (nicht gezeigt) verbunden und stellt an seinem Ausgang eine Versorgungsspannung (V bzw. GND) bereit. Gesteuert über die Gerätesteuerung 26 und damit den Mikrocontroller 23 kann das Netzteil 27 über den Bus 30 und den Busmaster 10 kontrolliert und überwacht werden.

In der Fig. 1 ist ein weiterer Busteilnehmer 20' gezeigt, der vom Busmaster 10 aus gesehen dem ersten Busteilnehmer 20 am Bus 30 nachgeordnet ist. Aus Gründen der Übersichtlichkeit ist für den weiteren Busteilnehmer 20' der innere Aufbau nicht detaillierter dargestellt. Er entspricht dem beim ersten Busteilnehmer 20 gezeigten Aufbau. Insbesondere ist auch der weitere Busteilnehmer 20' über Stichleitungen mit den Datenleitungen 32 und der Masseleitung 33 verbunden, wohingegen die Stromversorgungsleitung 31 des Busses 30 durch den weiteren Busteilnehmer 20' geschleift ist. Dazu führt der weitere Abschnitt 31' der Stromversorgungsleitung 30 in den weiteren Busteilnehmer 20' hinein und ein nächster Abschnitt 31" aus dem weiteren Busteilnehmer 20' heraus. Der weitere Busteilnehmer 20' weist ebenfalls ein Schaltorgan (analog zum Schaltorgan 25 des ersten Busteilnehmers 20) auf, das den weiteren Abschnitt 31' und den nächsten Abschnitt 31" der Stromversorgungsleitung 31 miteinander verbinden bzw. voneinander trennen kann.

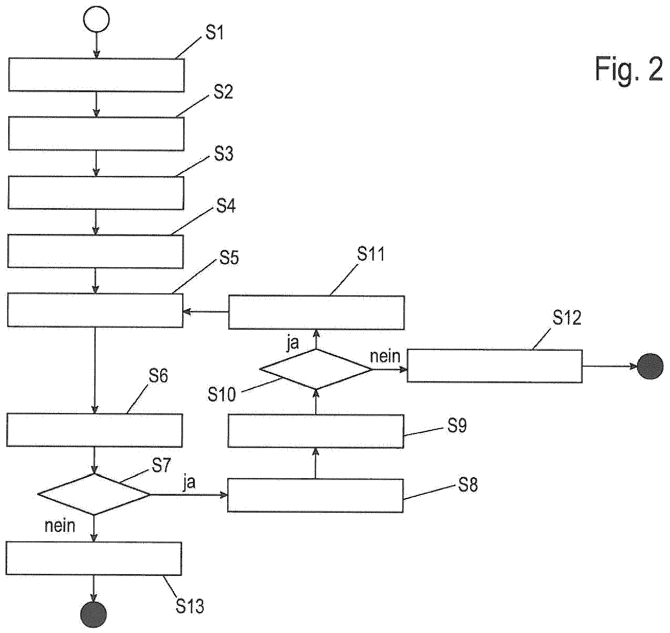

Ein Ausführungsbeispiel eines anmeldungsgemäßen Verfahrens zum Adressieren von Busteilnehmern eines Busses ist nachfolgend anhand eines Flussdiagramms in Fig.2 näher erläutert. Das dargestellte Verfahren kann zum Beispiel mit dem in Fig. 1 dargestellten Bussystem durchgeführt werden und wird nachfolgend mit Bezug auf das in Fig. 1 dargestellte Bussystem erläutert.

In einem Schritt S1 wird das Bussystem, beispielsweise umfassend den Busmaster 10, den ersten Busteilnehmer 20 und den weiteren Busteilnehmer 20' und einen diese Einheiten verbindenden Bus 30, bereitgestellt.

Im Hinblick auf seinen physikalischen Aufbau kann der Bus 30 beispielsweise ein vom Busmaster 10 ausgehendes Flachbandkabel sein, das über Anschlussstecker in Schneid-Klemm-Technik mit den einzelnen Busteilnehmern 20, 20' verbunden ist. Dabei kann die Kontaktierung der Datenleitungen 32 ebenso wie der Masseleitung 33 in Form von Stichleitungen vorgenommen werden, wohingegen die Stromversorgungsleitung 31 am Ort des Anschlusssteckers aufgetrennt wird und mit einem Eingang bzw. Ausgang des jeweiligen Busteilnehmers 20, 20' verbunden ist. In einer alternativen Ausgestaltung ist es möglich, dass jeder Busteilnehmer 20, 20' eine Anschlussbuchse für einen eingehenden und eine Anschlussbuchse für einen ausgehenden Busabschnitt aufweist. Innerhalb des Busteilnehmers 20, 20' sind dann die Datenleitungen 32 und die Masseleitung 33 unmittelbar und dauerhaft durchkontaktiert, wohingegen die Stromversorgungsleitung 31 über das Schaltorgan 25 von der Eingangs- zur Ausgangsbuchse des Busses 30 durchgeschleift ist.

In einem zweiten Schritt S2 des Verfahrens wird der Busmaster 10 mit der Versorgungsspannung (Vc, GND) versorgt. Daraufhin nimmt der Busmaster 10 seine Funktion auf, indem ein in einem Speicher 14 abgelegtes Programm auf dem Mikrocontroller 13 ausgeführt wird. Als Teil dieses Programms werden die Busanschaltungen 12 und der Bustreiber 16 initialisiert.

Weiterhin wird in einem nächsten Schritt S3 das Schaltorgan 15 von dem Mikrocontroller 13 eingeschaltet, um die den Busmaster 10 zugeführte Versorgungsspannung Vc auch auf die Stromversorgungsleitung 31 des Busses 30 zu legen.

Als Folge wird der erste Busteilnehmer 20 über die Masseleitung 33 und die Stromversorgungsleitung 31 ebenfalls mit Strom versorgt. Der im ersten Busteilnehmer 20 enthaltene Mikrocontroller 23 arbeitet daraufhin ein vorliegend in einem internen Speicher abgelegtes Programm ab. Weiterhin wird durch die Bestromung des ersten Busteilnehmers 20 die Busanschaltung 22 initialisiert. Nach dem Einschalten des ersten Busteilnehmers 20 ist das Schaltorgan 25 zunächst vom Mikrocontroller 23 nicht angesteuert und verbleibt in einem geöffneten Zustand.

In einem nächsten Schritt S4 des Verfahrens definiert der Mikrocontroller 13 des Busmasters 10 eine zunächst leere Liste angeschlossener Busteilnehmer. Ein Adresszähler wird auf eine erste beabsichtigte Adresse, beispielhaft auf die Adresse "1" gesetzt.

In einem nächsten Schritt S5 wird vom Busmaster 10 über den Bus 30 ein Kommando ("Setze_Adresse(Adresszähler)") abgesetzt, mit dem ein Busteilnehmer, der noch keine Adresse zugewiesen bekommen hat, auf die im Adresszähler gespeicherte und mit dem Kommando mitgeschickte Adresse gesetzt wird.

In dem vorliegenden Betriebszustand ist der erste Busteilnehmer 20 der einzige Busteilnehmer, der aktiv ist und noch keine Adresse zugewiesen hat. Er empfängt das übermittelte Kommando, extrahiert die enthaltene Adresse und setzt eine eigene Variable, in der seine Adresse gespeichert ist, auf den übermittelten Adresswert, vorliegend also auf den Adresswert "1". Die erfolgreiche Adresszuweisung wird vom ersten Busteilnehmer 20 mit einer Rückmeldung an den Busmaster 10 quittiert.

In einem folgenden Schritt S6 empfängt der Busmaster 10 das Quittierungssignal des ersten Busteilnehmers 20. Das Verfahren wird danach mit einem Schritt S7 fortgesetzt. Wird innerhalb einer vorgegebenen Wartezeit im Schritt S6 keine Quittierung vom Busmaster 10 erhalten, wird das Verfahren ebenfalls mit dem Schritt S7 fortgeführt.

Im Schritt S7 wird überprüft, ob innerhalb der vorgegebenen Wartezeit im Schritt S6 eine Quittierung erhalten wurde. Wenn dem so ist, also die Adresszuteilung erfolgreich war, wird das Verfahren mit einem nächsten Schritt S8 fortgeführt.

In diesem Schritt S8 übermittelt der Busmaster 10 ein Kommando zielgerichtet an den ersten Busteilnehmer 20 unter Verwendung der ihm zuvor zugewiesenen Adresse. Das Kommando weist den ersten Busteilnehmer 20 an, über den Mikrocontroller 23 das Schaltorgan 25 einzuschalten. Als Folge wird der weitere Abschnitt 31' der Stromversorgungsleitung 31 auf dem Bus 30 mit der Versorgungsspannung (Vc) beaufschlagt und entsprechend der nächste am Bus 30 angeschlossene, in der Fig.1 als weiterer Busteilnehmer 20' dargestellte Busteilnehmer mit Strom versorgt.

In einem Schritt S9 wartet der Busmaster 10 auf eine Bestätigung des ersten Busteilnehmers 20, dass dieser das Schaltorgan 25 eingeschaltet hat. Wird eine solche Bestätigung erhalten, wird das Verfahren mit einem nächsten Schritt S10 fortgesetzt. Falls nach einer vorgegebenen Wartezeit im Schritt S9 eine derartige Bestätigung nicht erhalten wurde, wird das Verfahren ebenfalls mit einem Schritt S10 fortgesetzt.

In dem Schritt S10 wird abgeprüft, ob eine Bestätigung über das erfolgreiche Einschalten des Schaltorgans 25 erhalten wurde. Falls dem so ist, wird das Verfahren mit einem Schritt S11 fortgeführt, in dem der Busmaster 10 den Adresswert des ersten Busteilnehmers 20 in die Liste der aktiven Busteilnehmer einträgt. Weiterhin wird ein nächster Adresswert eingestellt, beispielsweise indem der Adresszähler um den Wert 1 inkrementiert wird.

Das Verfahren verzweigt daraufhin zurück zum Schritt S5, in dem ein nächstes Kommando zum Setzen der nächsten Adresse an den nächsten aktiven Busteilnehmer, dem noch keine Adresse zugewiesen wurde, ausgegeben wird. Da der erste Busteilnehmer 20 bereits eine Adresse zugewiesen bekommen hat, ignoriert er dieses Kommando. Der weitere Busteilnehmer 20', der inzwischen auch seine Initialisierungsroutine durchlaufen hat und auf den Busverkehr lauscht, empfängt dagegen dieses Kommando und setzt nun seinerseits seine Adresse auf den zugewiesenen Adresswert.

Die Schritte S6 bis S11 werden nunmehr mit dem weiteren Busteilnehmer 20' wiederholt. Wenn auch dieser erfolgreich eine Adresse angenommen und quittiert hat, weiterhin das Kommando zum Einschalten seines Schaltorgans angenommen, ausgeführt und quittiert hat, wird auch seine Adresse in die Liste der aktiven Adressen aufgenommen. Gleichzeitig wird der nunmehr nächste Abschnitt 31" der Stromversorgungsleitung 31 des Busses 30 mit Versorgungsspannung beauftragt, um weitere Busteilnehmer 20 dem System hinzufügen zu können.

Falls in dem Schritt S10 festgestellt wurde, dass keine Bestätigung auf eine Anfrage, das Schaltorgane 25 des ersten Busteilnehmers 20 bzw. eines weiteren Busteilnehmers 20' anzuschalten, erfolgreich ausgeführt wurde, verzweigt das Verfahren zu einem Schritt S12, in dem ein Busfehler signalisiert wird und das Verfahren ohne eine erfolgreiche Adresszuteilung beendet wird.

Wird dagegen in einem Schritt S7 auf eine Herausgabe einer weiteren Adresse für einen weiteren Busteilnehmer keine Antwort erhalten, schließt der Busmaster 10 in einem Schritt S13 daraus, dass keine weiteren Busteilnehmer an dem Bus 30 angeschlossen sind und allen angeschlossenen Busteilnehmern 20, 20' erfolgreich eine Adresse zugeteilt wurde. Das Adressierungsverfahren ist abgeschlossen und der normale Funktionsbetrieb des Busmasters 10 und der Busteilnehmer 20, 20' kann ausgeführt werden.

Das anmeldungsgemäße Verfahren macht sich somit eine Daisy-Chain-Kette zur sukzessiven Adresszuteilung zunutze, wobei die Daisy-Chain-Kette jedoch nicht eine Datenleitung, sondern eine die Busteilnehmer versorgende Stromversorgungsleitung betrifft. Dabei bezieht sich die Stromversorgung des Busteilnehmers nicht zwingend auf den gesamten Busteilnehmer, aber zumindest auf eine für den Datenaustausch mit dem Bus relevante Komponente, wie beispielsweise eine Busanschaltung und/oder einen Mikrocontroller des Busteilnehmers.

Ein Vorteil besteht darin, dass die Schaltorgane, die die Stromversorgungsleitung für den weiteren Verlauf des Busses unterbrechen, für eine sicherheitsrelevante Abschaltung von Busteilnehmern verwendet werden können. Wenn beispielsweise der erste Busteilnehmer 20 eine Sicherheitseinrichtung, beispielsweise ein Lichtgitter, auswertet, und der vom Busmaster 10 aus gesehen weiter entfernt liegende weitere Busteilnehmer 20' einen Antrieb ansteuert, der innerhalb des vom Lichtgitter geschützten Bereichs agiert, so kann vorgesehen sein, dass der erste Busteilnehmer 20 die Stromversorgung zu den nachfolgenden Busteilnehmern, u.a. dem weiteren Busteilnehmer 20', unterbricht, wodurch eine Betätigung des Antriebs ausgeschlossen ist.

In einer bevorzugten Ausgestaltung des ersten Busteilnehmers 20 kann dabei vorgesehen sein, das Schaltorgan 25 redundant durch zwei hintereinander geschaltete Schalter auszubilden. Auf dieses Weise wird eine erhöhte Sicherheit beim Abschalten der nachfolgenden Busteilnehmer erreicht. Die weiteren Busteilnehmer 20' sind jeweils so ausgeführt, dass das Ansteuern und Betreiben eines angeschlossenen Antriebs schaltungstechnisch sicher verhindert ist, wenn der weitere Busteilnehmer 20' nicht mit Strom versorgt ist.

Im Zusammenhang mit der Fig. 2 wurde ein Adresszuteilungsverfahren beschrieben, das nach dem Bestromen des Busmasters 10 automatisch startet. Alternativ oder zusätzlich kann eine manuelle Einrichtung, beispielsweise ein entsprechender Betätigungstaster, am Busmaster 10 vorgesehen sein, bei dessen Betätigung das Adresszuteilungsverfahren ausgeführt wird. Auch kann vorgesehen sein, das Adresszuteilungsverfahren über ein entsprechendes Kommando, das über den übergeordneten Feldbus 1 empfangen wird, zu starten.

### Bezugszeichen

- 1: übergeordneter Feldbus
- 10: Busmaster
- 11: Stromversorgungseinheit
- 12: Busanschaltung
- 13: Mikrocontroller
- 14: Speicher
- 15: Schaltorgan
- 16: Bustreiber

- 20: erster Busteilnehmer
- 21: Stromversorgungseinheit
- 22: Busanschaltung
- 23: Mikrocontroller

- 25: Schaltorgan
- 26: Gerätesteuerung
- 27: Netzteil

- 20': weiterer Busteilnehmer

- 30: Bus
- 31: Stromversorgungsleitung
- 31', 31": Abschnitt der Stromversorgungsleitung
- 32: Datenleitung
- 33: Masseleitung

## Patentansprüche

1. Verfahren zum Zuteilen von Adressen von Busteilnehmern (20, 20') durch einen Busmaster (10), wobei
- die Busteilnehmer (20, 20') über einen Bus (30) mit dem Busmaster (10) verbunden sind,
- der Bus (30) mindestens eine Datenleitung (32) und mindestens eine Stromversorgungsleitung (31) für die Busteilnehmer (20,20') aufweist,
- die mindestens eine Datenleitung (32) von dem Busmaster (10) zu allen Busteilnehmern (20,20') geführt ist und die Stromversorgungsleitung (31) von dem Busmaster (10) zu einem ersten der Busteilnehmer (20) geführt ist und über ein Schaltorgan (25) in dem ersten Busteilnehmer (20) zu einem weiteren Busteilnehmer (20') durchgeschleift ist,
**gekennzeichnet durch** die folgenden Schritte:
- Beaufschlagen der mindestens einen Stromversorgungsleitung (31) des Busses (30) mit einer Versorgungsspannung für den ersten Busteilnehmer (20) durch den Busmaster (10);
- Übermitteln einer ersten Adresse an den ersten Busteilnehmer (20) durch den Busmaster (10);
- Empfangen und Speichern der ersten Adresse durch den ersten Busteilnehmer (20); und
- Betätigen des Schaltorgans (25) des ersten Busteilnehmers (20) zum Beaufschlagen des nächsten Busteilnehmers (20') mit der Versorgungsspannung über einen nächsten Abschnitt (31') der Stromversorgungsleitung (31).

2. Verfahren nach Anspruch 1, mit den weiteren Schritten:
- Zuteilen einer weiteren Adresse an den weiteren Busteilnehmer (20') durch den Busmaster (10);
- Erhalten und Speichern der weiteren Adresse durch den weiteren Busteilnehmer (20'); und
- Betätigen eines Schaltorgans des weiteren Busteilnehmers (20') zum Beaufschlagen eines nächsten Busteilnehmers (20') mit der Versorgungsspannung über einen nächsten Abschnitt (31") der Stromversorgungsleitung (31).

3. Verfahren nach Anspruch 2, bei dem die Schritte des Zuteilens einer weiteren Adresse, des Erhaltens und Speicherns der weiteren Adresse durch den weiteren Busteilnehmer (20') und das Betätigen eines Schaltorgans des weiteren Busteilnehmers sukzessive für alle an den Bus (30) angeschlossenen Busteilnehmer (20, 20') durchgeführt werden, bis allen angeschlossenen Busteilnehmern (20, 20') eine Adresse zugeteilt ist.

4. Verfahren nach einem der Ansprüche 1 bis 3, dessen Schritte ausgeführt werden, nachdem der Busmaster (10) mit einer Spannung (Vc, GND) zu seiner Stromversorgung beaufschlagt wird.

5. Verfahren nach einem der Ansprüche 1 bis 4, dessen Schritte nach einer Betätigung eines Betätigungstasters am Busmaster (10) ausgeführt werden.

6. Verfahren nach einem der Ansprüche 1 bis 5, bei dem der Busmaster (10) ein Kommando zur Adresszuteilung mit einer zu vergebenden Adresse auf den Bus (30) ausgibt und bei dem dieses Kommando nur von einem bestromten Busteilnehmer (20, 20') berücksichtigt wird, der noch keine Adresse zugeteilt bekommen hat.

7. Bussystem mit einem Busmaster (10), mindestens zwei Busteilnehmern (20,20') und einem Bus (30), der die Busteilnehmer (20,20') mit dem Busmaster (10) verbindet, wobei der Bus (30) mindestens eine Datenleitung (32) und mindestens eine Stromversorgungsleitung (31) aufweist, wobei
- die mindestens eine Datenleitung (32) den Busmaster (10) mit allen Busteilnehmern (20,20') verbindet, und
- die mindestens eine Stromversorgungsleitung (31) den Busmaster (10) mit einem ersten Busteilnehmer (20) verbindet und durch den ersten Busteilnehmer (20) zu einem weiteren Busteilnehmer (20') durchgeschleift ist, wobei innerhalb eines Busteilnehmers (20, 20') mindestens ein Schaltorgan (25) in die Stromversorgungsleitung geschaltet ist,
**dadurch gekennzeichnet, dass**
das Bussystem zur Durchführung eines Verfahrens nach einem der Ansprüche 1 bis 6 eingerichtet ist.

8. Bussystem nach Anspruch 7, bei dem der Busmaster (10) ebenfalls ein Schaltorgan (15) aufweist, um die mindestens eine Stromversorgungsleitung (31) gesteuert mit einer Versorgungsspannung (Vc) zu beaufschlagen.

9. Bussystem nach Anspruch 7 oder 8, bei dem der erste und/oder der weitere Busteilnehmer (20, 20') jeweils eine Busanschaltung (22) aufweist, die dauerhaft mit der mindestens einen Datenleitung (32) verbindbar ist.

10. Bussystem nach einem der Ansprüche 1 bis 9, bei dem der erste und/oder der weitere Busteilnehmer (20, 20') jeweils einen Mikrocontroller (23) aufweist, der das Schaltorgan (25) ansteuert.

11. Bussystem nach Anspruch 9 oder 10, bei dem die Busanschaltung (22) und/oder der Mikrocontroller (23) über die mindestens eine Stromversorgungsleitung (31) des Busses (30) mit Betriebsstrom versorgt werden.

12. Bussystem nach einem der Ansprüche 7 bis 11, bei dem das Schaltorgan (25) des ersten und/oder des weiteren Busteilnehmers (20, 20') zwei hintereinander geschaltete, redundante Schalter aufweist.

## Claims

1. Method for the assigning of addresses of bus subscribers (20, 20') by a bus master (10), wherein
- the bus subscribers (20, 20') are connected to the bus master (10) via a bus (30),
- the bus (30) has at least one data line (32) and at least one power supply line (31) for the bus subscribers (20, 20'),
- the at least one data line (32) is routed from the bus master (10) to all bus subscribers (20, 20') and the power supply line (31) is routed from the bus master (10) to a first of the bus subscribers (20) and is looped through to a further bus subscriber (20') via a switching element (25) in the first bus subscriber (20),
**characterized by** the following steps:
- the bus master (10) applies a supply voltage for the first bus subscriber (20) to the at least one power supply line (31) of the bus (30);
- the bus master (10) transmits a first address to the first bus subscriber (20);
- the first bus subscriber (20) receives and stores the first address; and
- the switching element (25) of the first bus subscriber (20) is actuated in order to apply the supply voltage to the next bus subscriber (20') via a next section (31') of the power supply line (31).

2. Method according to claim 1, comprising the further steps:
- the bus master (10) assigns a further address to the further bus subscriber (20');
- the further bus subscriber (20') receives and stores the further address; and
- a switching element of the further bus subscriber (20') is actuated in order to apply the supply voltage to a next bus subscriber (20') via a next section (31") of the power supply line (31).

3. Method according to claim 2, in which the steps of assigning a further address, of the receiving and storing of the further address by the further bus subscriber (20') and the actuation of a switching element of the further bus subscriber are carried out successively for all bus subscribers (20, 20') connected to the bus (30), until an address has been assigned to all connected bus subscribers (20, 20').

4. Method according to one of claims 1 to 3, the steps of which are carried out once a voltage (Vc, GND) has been applied to the bus master (10) in order to supply power thereto.

5. Method according to one of claims 1 to 4, the steps of which are carried out once an actuation button on the bus master (10) has been actuated.

6. Method according to one of claims 1 to 5, in which the bus master (10) outputs on the bus (30) a command for address assignment with an address to be assigned, and in which said command is taken into consideration only by a powered bus subscriber (20, 20') that has not yet been assigned an address.

7. Bus system comprising a bus master (10), at least two bus subscribers (20, 20'), and a bus (30) which connects the bus subscribers (20, 20') to the bus master (10), wherein the bus (30) has at least one data line (32) and at least one power supply line (31), wherein
- the at least one data line (32) connects the bus master (10) to all bus subscribers (20, 20'), and
- the at least one power supply line (31) connects the bus master (10) to a first bus subscriber (20) and is looped through to a further bus subscriber (20') by the first bus subscriber (20), wherein at least one switching element (25) is connected into the power supply line within a bus subscriber (20, 20'),
**characterized in that**
the bus system is configured for carrying out a method according to one of claims 1 to 6.

8. Bus system according to claim 7, in which the bus master (10) likewise has a switching element (15) for applying a supply voltage (Vc) to the at least one power supply line (31) in a controlled manner.

9. Bus system according to claim 7 or 8, in which the first and/or further bus subscriber (20, 20') in each case has a bus interface (22) which can be permanently connected to the at least one data line (32).

10. Bus system according to one of claims 1 to 9, in which the first and/or further bus subscriber (20, 20') in each case has a microcontroller (23) which controls the switching element (25).

11. Bus system according to claim 9 or 10, in which the bus interface (22) and/or the microcontroller (23) are supplied with operating current via the at least one power supply line (31) of the bus (30).

12. Bus system according to one of claims 7 to 11, in which the switching element (25) of the first and/or further bus subscriber (20, 20') has two redundant switches connected in series.

## Revendications

1. Procédé d'attribution d'adresses d'utilisateurs de bus (20, 20') par un maître de bus (10), selon lequel
- les utilisateurs de bus (20, 20') sont reliés au maître de bus (10) par un bus (30),
- le bus (30) présente au moins une ligne de données (32) et au moins une ligne d'alimentation (31) pour les utilisateurs de bus (20, 20'),
- ladite au moins une ligne de données (32) est amenée du maître de bus (10) à tous les utilisateurs de bus (20, 20') et la ligne d'alimentation (31) est amenée du maître de bus (10) à un premier des utilisateurs de bus (20) et est passée via un organe de commutation (25) du premier utilisateur de bus (20) vers un autre utilisateur de bus (20'),
**caractérisé par** les étapes suivantes :
- le maître de bus (10) applique une tension d'alimentation pour le premier utilisateur de bus (20) à ladite au moins une ligne d'alimentation (31) du bus (30) ;
- le maître de bus (10) transmet une première adresse au premier utilisateur de bus (20) ;
- le premier utilisateur de bus (20) reçoit et mémorise la première adresse ; et
- l'organe de commutation (25) du premier utilisateur de bus (20) est actionné pour appliquer la tension d'alimentation à l'utilisateur de bus (20') suivant via une section suivante (31') de la ligne d'alimentation (31).

2. Procédé selon la revendication 1, comprenant les autres étapes suivantes :
- le maître de bus (10) attribue une autre adresse à l'autre utilisateur de bus (20') ;
- l'autre utilisateur de bus (20') obtient et mémorise l'autre adresse ; et
- un organe de commutation de l'autre utilisateur de bus (20') est actionné pour appliquer la tension d'alimentation à un utilisateur de bus suivant (20') via une section suivante (31") de la ligne d'alimentation (31).

3. Procédé selon la revendication 2, selon lequel les étapes consistant à attribuer une autre adresse, à obtenir et mémoriser l'autre adresse par l'autre utilisateur de bus (20') et à actionner un organe de commutation de l'autre utilisateur de bus sont effectuées successivement pour tous les utilisateurs de bus (20, 20') connectés au bus (30) jusqu'à ce qu'une adresse ait été attribuée à tous les utilisateurs de bus (20, 20') connectés.

4. Procédé selon l'une des revendications 1 à 3, dont les étapes sont exécutées après qu'une tension (Vc, GND) a été appliquée au maître de bus (10) pour son alimentation.

5. Procédé selon l'une des revendications 1 à 4, dont les étapes sont exécutées après qu'un bouton-poussoir d'actionnement sur le maître de bus (10) a été actionné.

6. Procédé selon l'une des revendications 1 à 5, selon lequel le maître de bus (10) émet sur le bus (30) une instruction d'attribution d'adresse avec une adresse à attribuer, et selon lequel cette instruction n'est prise en compte que par un utilisateur de bus (20, 20') alimenté auquel aucune adresse n'a encore été attribuée.

7. Système de bus comprenant un maître de bus (10), au moins deux utilisateurs de bus (20, 20') et un bus (30) qui relie les utilisateurs de bus (20, 20') au maître de bus (10), le bus (30) présentant au moins une ligne de données (32) et au moins une ligne d'alimentation (31), dans lequel
- ladite au moins une ligne de données (32) relie le maître de bus (10) à tous les utilisateurs de bus (20, 20') et
- ladite au moins une ligne d'alimentation (31) relie le maître de bus (10) à un premier utilisateur de bus (20) et est passée par le premier utilisateur de bus (20) à un autre utilisateur de bus (20'), au moins un organe de commutation (25) étant monté dans la ligne d'alimentation à l'intérieur d'un utilisateur de bus (20, 20'),
**caractérisé en ce que**
le système de bus est conçu pour mettre en oeuvre un procédé selon l'une des revendications 1 à 6.

8. Système de bus selon la revendication 7, dans lequel le maître de bus (10) présente également un organe de commutation (15) pour appliquer de manière commandée une tension d'alimentation (Vc) à ladite au moins une ligne d'alimentation (31).

9. Système de bus selon la revendication 7 ou 8, dans lequel le premier et/ou l'autre utilisateur de bus (20, 20') présentent chacun une interface de bus (22) qui peut être reliée de façon permanente à ladite au moins une ligne de données (32).

10. Système de bus selon l'une des revendications 1 à 9, dans lequel le premier et/ou l'autre utilisateur de bus (20, 20') présentent chacun un microcontrôleur (23) qui commande l'organe de commutation (25).

11. Système de bus selon la revendication 9 ou 10, dans lequel l'interface de bus (22) et/ou le microcontrôleur (23) sont alimentés en courant de fonctionnement par ladite au moins une ligne d'alimentation (31) du bus (30).

12. Système de bus selon l'une des revendications 7 à 11, dans lequel l'organe de commutation (25) du premier et/ou de l'autre utilisateur de bus (20, 20') présente deux commutateurs redondants montés en série.
